# EUROPEAN PATENT SPECIFICATION

(11) **EP 2 921 953 B1**
(45) Date of publication and mention of the grant of the patent: **28.07.2021**
(21) Application number: 13854390.5
(22) Date of filing: 11.11.2013
(51) Int. Cl.: G06F 8/654, G06F 9/445

(54) **METHOD AND SYSTEM FOR UPGRADING DIGITAL VIDEO RECORDER**
VERFAHREN UND SYSTEM ZUM AUFRÜSTEN EINES DIGITALEN VIDEOREKORDERS
PROCÉDÉ ET SYSTÈME PERMETTANT DE METTRE À NIVEAU UN ENREGISTREUR VIDÉO NUMÉRIQUE

(30) Priority: 16.11.2012 CN 201210466148
(43) Date of publication of application: 23.09.2015
(73) Proprietor: Hangzhou Hikvision Digital Technology Co., Ltd., Hangzhou, Zhejiang 310051 (CN)
(72) Inventor: SUN, Chong, Hangzhou Zhejiang 310051 (CN); LV, Mingcheng, Hangzhou Zhejiang 310051 (CN); SUN, Chenghua, Hangzhou Zhejiang 310051 (CN)
(74) Representative: AWA Sweden AB
(86) International application number: PCT/CN2013/086831
(87) International publication number: WO 2014/075591

(56) References cited:
- EP-A1- 1 372 063
- CN-A- 1 776 618
- CN-A- 101 795 295
- KR-A- 20060 019 893
- US-A1- 2002 188 934
- US-A1- 2006 109 505
- US-A1- 2008 301 671
- US-A1- 2013 275 956
- Anonymous: "SADP application - tool for integrating CCTV systems based on HIKVISION equipment", , 10 September 2011 (2011-09-10), XP055267133, Retrieved from the Internet: URL:https://web.archive.org/web/2011091014 3104/http://www.dipolnet.com/sadp_applicat ion_-_tool_for_integrating_cctv_systems_ba sed_on_hikvision_equipment_bib308.htm [retrieved on 2016-04-20]

## Description

### Related documents

The present disclosure claims priority of Chinese patent application No. 201210466148.5 titled "method and apparatus of mass updating digital video recorders" and filed on November 16, 2012 with the Patent Office of the People's Republic of China.

### Technical Field

The present disclosure relates to system update techniques, and particularly, to a method and a system of updating digital video recorders (DVR).

### Background

Updating all of hard disc video recorders (i.e., digital video recorders, DVR) within a local area network (LAN) usually requires cooperation of a management server and a firmware server.

The management server sends configuration parameters of the firmware server to the DVRs which obtain files of a version from the firmware server by using the configuration parameters to perform the update.
"Method of upgrading program of portable device and portable device having program upgrade function"(US 20080301671 A1) describes a portable device searches for a newer version of program in nearby portable devices, obtains a program file of a newer version from a nearby portable device if a nearby portable device has a newer version of the program, or requests a nearby portable device (i.e., second porable device) to obtain version information of a third portable device around the second portable device and obtains a program file of a newer version from the third portable device via the second portable device if the third portable device has a newer version of the program. This scheme enables a version synchronization in small areas, but it may take a long time to have all devices updated to the newest version of a program.
"Software updating system, software updating method and software updating program" (EP 1372063 A1) describes a user terminal obtians a version information file from a first server and obtains an update compression file from a second server storing the most up-to-date applications. This scheme provides a method of updating software to the most up-to-date application, and the updating process requires each device to be capable of communicating to the first server and the second server.

### Summary

Various examples of the present disclosure provide a method of updating DVRs to realize automatic update of DVRs and improve the efficiency of the update process.

Various examples of the present disclosure provide a system of updating DVRs to realize automatic update of DVRs and improve the efficiency of the update process.

The invention is set out in the independent claims.

### Brief Description of the Drawings

Features of the present disclosure are illustrated by way of example and not limited in the following figures, in which like numerals indicate like elements, in which:
FIG.1 is a schematic diagram illustrating a communication system;
FIG. 2 is a flowchart illustrating a method of updating DVRs in accordance with examples of the present disclosure;
FIG. 3 is a flowchart illustrating a method of updating DVRs in accordance with examples of the present disclosure;
FIG. 4 is a flowchart illustrating a method of updating DVRs in accordance with examples of the present disclosure;
FIG. 5 is a flowchart illustrating a method of updating DVRs in accordance with examples of the present disclosure;
FIG. 6 is a flowchart illustrating a method of updating DVRs in accordance with examples of the present disclosure;
FIG. 7 is a schematic diagram illustrating a system of updating DVRs in accordance with examples of the present disclosure;
FIG. 8 is a schematic diagram illustrating an example of a DVR in accordance with examples of the present disclosure.

### Detailed Descriptions

For simplicity and illustrative purposes, the present disclosure is described by referring mainly to an example thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure. As used herein, the term "includes" means includes but not limited to, the term "including" means including but not limited to. The term "based on" means based at least in part on. Quantities of an element, unless specifically mentioned, may be one or a plurality of, or at least one.

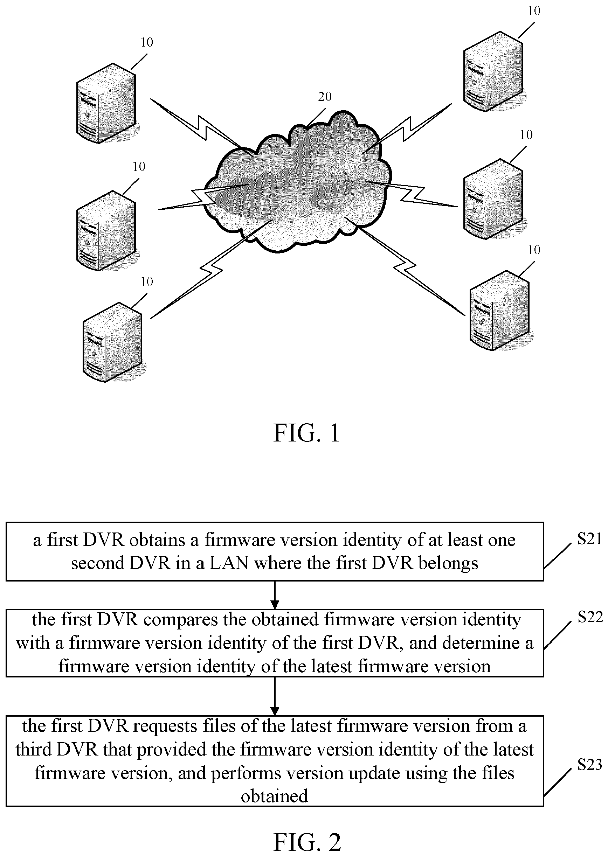

FIG. 1 is a schematic diagram illustrating a communication system in accordance with an example of the present disclosure. As shown in FIG. 1, the communication system may include plural DVRs 10 and a communication network 20. The communication network 20 may be a local area network (LAN) established using any LAN protocols. The plural DVRs 10 may communicate with each other via the communication network 20.

The following takes a process of updating a DVR in a LAN as an example to illustrate the technical mechanism of various examples. Other DVRs can initiate an update process in a similar manner provided by various examples of the present disclosure. The DVR that initiates the update process is also referred to as a to-be-updated DVR, i.e., a DVR that is to be updated.

FIG. 2 is a flowchart illustrating a method of updating DVRs in accordance with examples of the present disclosure. The method may include the following procedures.

At block S21, a first DVR obtains a firmware version identity of at least one second DVR within a LAN where the first DVR belongs.

At block S22, the first DVR compares the obtained firmware version identity with a firmware version identity of the first DVR, determines a firmware version identity of the latest firmware version.

At block S23, the first DVR obtains files of the latest firmware version from a third DVR that provides the firmware version identity of the latest firmware version, and performs version update using the files obtained.

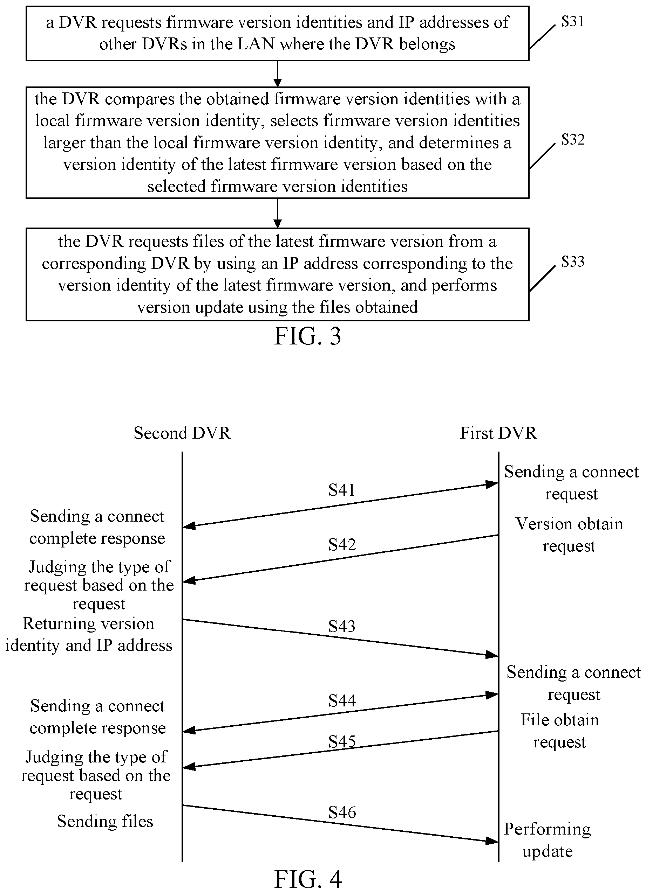

FIG. 3 is a flowchart illustrating a method of updating DVRs in accordance with examples of the present disclosure. The method may include the following procedures.

At block S31, a first DVR requests firmware version identities and IP addresses of other DVRs in the LAN where the first DVR belongs.

DVRs in the LAN communicate with each other. In an example, the first DVR obtains firmware version identities of other DVRs in the LAN by: sending a connect request to the other DVRs in the LAN, receiving a connect complete response from a second DVR, sending a version request (also referred to as first request) to the second DVR, and receiving a firmware version identity returned by the second DVR. Various examples may adopt conventional communication mechanisms, or a custom designed communication mechanism. For example, the connection request may be a Socket connect request, or the like.

In order to communicate with each other, the DVRs need to have communication addresses of other DVRs, e.g., IP addresses, MAC addresses or the like. In an example, the first DVR searches for other active DVRs in the LAN by using a search active device protocol (SADP) before sending the connect request to another DVR in the LAN. By using the SADP, the first DVR may obtain IP addresses of other active DVRs in the LAN so as to send the connect request to the DVRs found. DVRs in other examples may adopt other automatic discovery schemes to obtain communication addresses of other DVRs. In an example, the first DVR obtains a communication address and an identity of another DVR through the above search process, record a relation which associates the communication address with the identity. In another example, the first DVR may number the other DVRs, and store a relation which associates the obtained communication address of a DVR with the number allocated to the DVR. Other examples may adopt other scheme to record the communication addresses of the DVRs. There are numerous other schemes which are thus not enumerated herein.

According to some examples, the first DVR may store communication addresses of other DVRs, e.g., in a list, for future use after discovering other active DVRs. In other examples, the first DVR may perform the above search process each time the update process is performed.

Update procedures may be performed when the DVR starts up by default, or may be performed when there is the need, or may be performed at pre-defined times. For example, a DVR may receive a startup command to start an update process, and execute the SADP procedures to discover other active DVRs in the LAN. The startup command may be a command received from an external device, or may be a command triggered by a timer in the DVR. In an example, the updating procedures may be a task configured in the DVR for system update.

At block S32, the first DVR compares the obtained firmware version identities with a local firmware version identity of the first DVR, and selects a firmware version identity larger than the local firmware version identity, thus the firmware version identity of the latest (or newest) firmware version is determined.

In an example, the procedure of selecting a firmware version identity of a firmware version newer than the local firmware version may include selecting a firmware version identity larger than the local firmware version identity. The procedure of determining the firmware version identity of the latest firmware version from the selected firmware version identities includes determining the largest firmware version identity. The manner of implementing this procedure is decided by the numbering scheme of the firmware version identities. The above merely takes a situation where a newer version has a larger value of the firmware version identity as an example, and other examples may adopt other manners to determine the latest firmware version.

At block S33, the first DVR sends a file request (referred to as second request) to a third DVR that provides the firmware version identity of the latest firmware version by using the IP address which is associated with the firmware version identity, and performs version update using files obtained.

In an example, the first DVR may obtain the files from the third DVR by: sending a connect request to the third DVR using the communication address (e.g., an IP address, a MAC address or the like) associated with the firmware version identity of the latest firmware version, receiving a connect complete response, sending the second request to the third DVR, and receiving files sent by the third DVR.

In an example, the first DVR may obtain the communication address of a second DVR when receiving the firmware version identity returned by the second DVR, and record a relation which associates the firmware version identity provided by the second DVR with the communication address of the second DVR. In another example, the first DVR may record the communication address of a second DVR when the first DVR discovers the second DVR, and store the firmware version identity provided by the second DVR in a record where the communication address of the second DVR is stored. In other examples, the first DVR may record a relation which associates the communication address and the identity of a second DVR with the firmware version identity provided by the second DVR. Contents in the response message which includes the firmware version identity may differ according to the implementation manner adopted. For example, when the communication is implemented using the IP mechanism, the response message may only include a firmware version identity, and the IP address of the DVR that sent the response message may be obtained from the IP packet header of the response message. In other examples, the response message may include a firmware version identity and an identity of the second DVR. The first DVR that received the response message may search records of communication addresses and identities of DVRs obtained in the previous search process to obtain the communication address of the second DVR. There are various other schemes which are not enumerated herein.

According to examples, a first DVR requests firmware version identities of other DVRs in the LAN where the first DVR belongs, determines the firmware version identity of the latest firmware version, request files of the latest firmware version from a third DVR that provided the firmware version identity of the latest firmware version, and performs version update using the files obtained. According to the mechanism, no management server or firmware server is needed. After one or multiple DVRs in a LAN are updated (e.g., an administrator may manually update the one or multiple DVRs), other DVRs in the LAN can perform version update automatically. As such, automatic update of DVRs is implemented. Further, since update procedures are distributed to multiple DVRs within the LAN, the efficiency of the update process is improved, especially when there are a large number of DVRs to be updated.

The method of updating DVRs is illustrated by taking the processes as shown in FIG. 4, 5 and 6 as an example. In the following examples, the DVR that initiates an update process is referred to as the first DVR, and the other DVRs are referred to as second DVRs or a server DVR.

FIG. 4 is a flowchart illustrating a method of updating DVRs in accordance with examples of the present disclosure. The method may include the following procedures.

At block S41, a first DVR (also referred to as a client DVR) sends a connect request to a second DVR (also referred to as a server DVR), and the second DVR returns a connect complete response to the first DVR after receiving the connect request.

At block S42, the first DVR sends a first request to the second DVR. After receiving the first request, the second DVR may determine whether the request is for obtaining a firmware version identity or for obtaining files according to the request.

At block S43, the second DVR sends a firmware version identity of the second DVR to the first DVR according to the first request received at S42.

The first DVR receives and records the firmware version identity of the second DVR and the IP address of the second DVR (the IP address may be obtained from the payload of the received response message or from the IP header of the received response message), and determines a firmware version identity of the latest firmware version based on the received firmware version identity. The procedure of determining the firmware version identity of the latest firmware version may include: the first DVR compares the received firmware version identity with the firmware version identity of the first DVR, selects firmware version identities that are larger than the firmware version identity of the first DVR, and determining a firmware version identity of the latest firmware version according to the selected firmware version identities.

In an example, the first DVR may disconnect the connection with the second DVR after receiving the response message. Thus, the connection may be re-established at block S44.

At block S44, the first DVR sends a connect request to one of the second DVRs that is corresponding to the firmware version identity of the latest firmware version (which is referred to as the third DVR); after receiving the connect request, the first DVR returns a connect complete response to the first DVR.

At block S45, the first DVR sends a second request to the third DVR. After receiving the second request, the third DVR may determine whether the request is for obtaining a firmware version identity or for obtaining files according to the request.

At block S46, the third DVR sends files of the firmware version of the third DVR to the first DVR according to the second request received at block S45, and the first DVR performs version update after receiving the files.

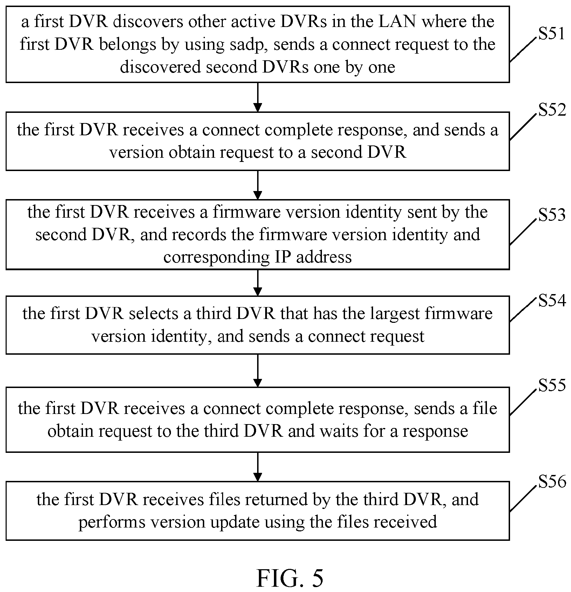

FIG. 5 is a flowchart illustrating a method of updating DVRs in accordance with examples of the present disclosure. The method may include the following procedures.

At block S51, a first DVR searches a LAN where the first DVR belongs for other active DVRs by using SADP, and sends a connect request to each of second DVRs found out.

In an example, the DVR that initiates an update process is referred to as the first DVR, and other DVRs are referred to as second DVRs.

At block S52, the first DVR receives a connect complete response, and sends a first request to a second DVR.

At block S53, the first DVR receives a firmware version identity sent by the second DVR, and records the firmware version identity with the IP address of the second DVR.

At block S54, after inquiring all of active second DVRs, the first DVR selects one of the second DVRs that has the latest firmware version (which is referred to as a third DVR), and sends a connect request to the third DVR.

The procedure of determining the version identity of the latest firmware version may include: the first DVR compares received firmware version identities with the firmware version identity of the first DVR, selects firmware version identities larger than the firmware version identity of the first DVR, and determines the firmware version identity of the latest firmware version according to the selected firmware version identities.

At block S55, the first DVR receives a connect complete response, and sends a second request to the third DVR.

At block S56, the first DVR receives files sent by the third DVR, and performs version update using the received files.

When updating the system, the first DVR may be configured to not respond to inquiry about firmware version from other clients.

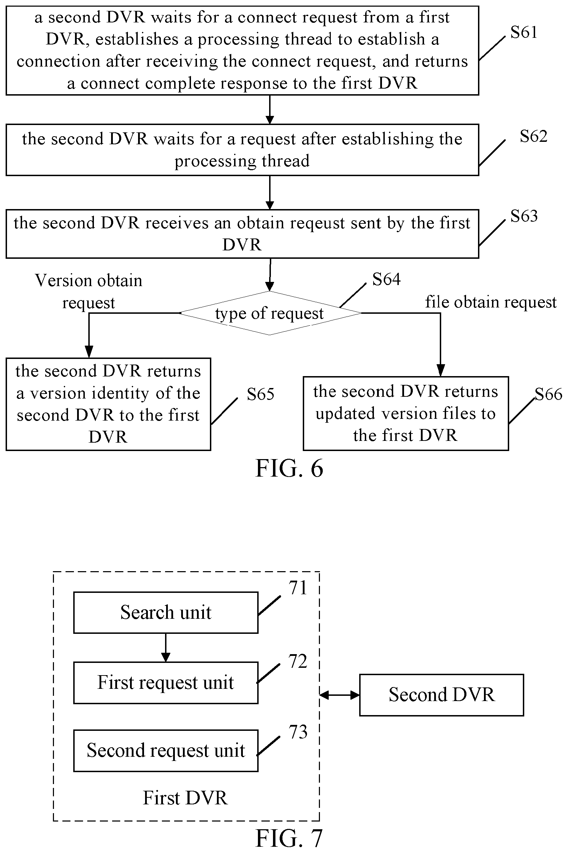

FIG. 6 is a flowchart illustrating a method of updating DVRs in accordance with examples of the present disclosure. The method may include the following procedures.

At block S61, a second DVR waits for a connect request from a first DVR, establishes a processing thread to establish a connection after receiving the connect request, and sends a connect complete response to the first DVR.

In an example, the DVR that initiates the update process is referred to as the first DVR, and other DVRs are referred to as second DVRs.

The second DVR may process multiple requests in parallel by establishing multiple processing threads.

At block S62, the second DVR waits for a request after establishing the processing thread.

At block S63, the second DVR receives an obtain request from the first DVR.

At block S64, the second DVR judges the type of the received request received at block S63, performs the procedure in block S65 if the request is for obtaining a firmware version identity, or performs the procedure in block S66 if the request is for obtaining files of the firmware version.

At block S65, the second DVR sends the firmware version identity of the second DVR to the first DVR.

At block S66, the second DVR sends files of the firmware version of the second DVR to the first DVR.

FIG. 7 is a schematic diagram illustrating a system of updating DVRs in accordance with examples of the present disclosure. The system may include plural DVRs. In this example, the DVR that initiates an update process is referred to as the first DVR, and other DVRs are referred to as second DVRs.

The first DVR is configured to obtain a firmware version identity of at least one second DVR within a LAN where the first DVR belongs, compare the obtained firmware version identity with a firmware version identity of the first DVR, determine a firmware version identity of the latest firmware version, obtain files of the latest firmware version from a third DVR that provides the firmware version identity of the latest firmware version, and perform version update using the files obtained.

In an example, the first DVR may include a first request unit 72 and a second request unit 73. The first request unit 72 is configured to obtain a firmware version identity of at least one second DVR in a LAN where the first DVR belongs, compare the firmware version identity obtained with a firmware version identity of the first DVR, and determine a version identity of the latest firmware version. The second request unit 73 is configured to obtain files of the latest firmware version from a third DVR that provides the firmware version identity of the latest firmware version, and perform version update using the files obtained.

In an example, the first request unit 72 is configured to send a first request to other DVRs in the LAN, and receive version identities and IP addresses sent by the other DVRs. The second request unit 73 is configured to compare the obtained firmware version identities with a firmware version identity of the first DVR, select firmware version identities of firmware versions newer than the firmware version of the first DVR (e.g., selecting firmware version identities larger than the firmware version identity of the first DVR), determine a firmware version identity of the latest firmware version according to selected firmware version identities, send a second request to a third DVR by using an IP address corresponding to the firmware version identity of the latest firmware version, receive files sent by the third DVR, and perform version update using the files obtained.

The third DVR is configured to send a firmware version identity of the third DVR to the first DVR in response to the first request, and send files of the firmware version of the third DVR to the first DVR in response to the second request.

In an example, the first request unit 72 is configured to send a connect request to other DVRs in the LAN where the first DVR belongs, receive connect complete responses, send the first request to the other DVRs, and receive firmware version identities and IP addresses sent by the other DVRs.

In an example, the first DVR may also include a search unit 71, configured to discover other active DVRs in the LAN by using an active device discover protocol, send a command to the first request unit 72. The first request unit 72 receives the command, and sends a connect request to the other DVRs discovered.

In an example, the second request unit 73 is configured to send a connect request to a third DVR that provides the version identity of the latest firmware version, receive a connect complete response, send a second request to the third DVR, and receive files sent by the third DVR.

The third DVR is configured to send a firmware version identity of the third DVR to the first DVR in response to the first request, and send files of the firmware version of the third DVR to the first DVR in response to the second request.

In an example, the first DVR and other DVRs are all DVRs.

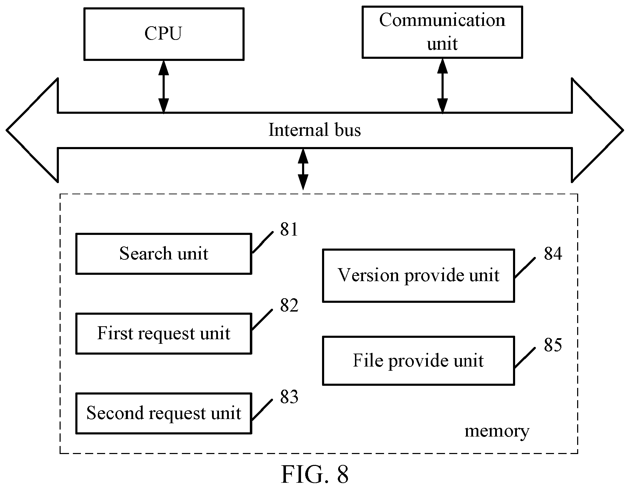

FIG. 8 is a schematic diagram illustrating an example of a DVR in accordance with examples of the present disclosure. The DVR may include a CPU, a memory, a communication unit and an internal bus.

The memory stores a series of machine-readable instructions executable by the CPU to make the CPU perform actions to implement the technical mechanism of examples of the present disclosure.

The communication unit is configured to communicate with other devices in the network.

The internal bus enables communication between the units, may be a bus connected to each of the units or a collection of wires connecting the units.

In an example, the memory may store a search unit 81, a first request unit 82 and a second request unit 83. The search unit 81, the first request unit 82 and the second request unit 83 have similar functions with the above search unit 71, the first request unit 72 and the second request unit 73 respectively.

In an example, the memory may also store a version provide unit 84 and a file provide unit 85. The version provide unit 84 is configured to provide a firmware version identity of the DVR to a DVR that sent a firmware version request. The file provide unit 85 is configured to provide files of a firmware version of the DVR to a DVR that sent a file request.

According to examples, a DVR automatically detects latest firmware version in a LAN and performs system update by applying a client/server (C/S) technique and a peer-to-peer (P2P) technique to plural DVRs in the LAN, and each DVR may serve as a server DVR and a client DVR at the same time. No management server or firmware server is needed in the LAN. Server DVRs and client DVRs may establish connections and transport data using the TCP protocol.

It should be understood that in the above processes and structures, not all of the procedures and modules are necessary. Certain procedures or modules may be omitted according to the needs. The order of the procedures is not fixed, and can be adjusted according to the needs. The modules are defined based on function simply for facilitating description. In implementation, a module may be implemented by multiple modules, and functions of multiple modules may be implemented by the same module. The modules may reside in the same device or distribute in different devices. The "first", "second" in the above descriptions are merely for distinguishing two similar objects, and have no substantial meanings.

In various embodiments, a module may be implemented by hardware and or machine-executable instructions. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

A machine-readable storage medium is also provided, which is to store instructions executable by a machine to implement the method of various examples. Specifically, a system or apparatus may have a storage medium which stores machine-readable program codes for implementing functions of any of the above examples. A computing device (or a CPU or an MPU) in the system or the apparatus may read and execute the program codes stored in the storage medium. In addition, the program codes may cause an operating system running in a computer to implement part or all of the operations. In addition, the program codes may be read out from a storage medium and be written in a storage device in an extension board inserted in the computer or in a storage device in an extension unit connected to the computer. In this example, a CPU in the extension board or the extension unit executes at least part of the operations according to the instructions of the program codes to realize the technical mechanism of any of the above examples.

The storage medium for providing the program codes may include floppy disk, hard drive, magneto-optical disk, compact disk (such as CD-ROM, CD-R, CD-RW, DVD-ROM, DVD-RAM, DVD-RW, DVD+RW), magnetic tape drive, Flash card, ROM and so on. Optionally, the program code may be downloaded from a server computer via a communication network.

The scope of the claims should not be limited by the embodiments set forth in the examples, but should be given the broadest interpretation consistent with the description as a whole.

## Claims

1. A method of updating digital video recorders, DVR, **characterized by** comprising:
obtaining (S31), by a first DVR, firmware version information and IP addresses of the other DVRs within a local area network, LAN, where the first DVR belongs;
comparing (S32) all of the obtained version information with firmware version information of the first DVR to determine the newest firmware version; and
obtaining (S33) a file of the newest firmware version from a second DVR that provides the firmware version information of the newest firmware version by using an IP address provided by the second DVR; and
performing (S33) version update of the first DVR using the file obtained.

2. The method of claim 1, wherein
obtaining the firmware version information and the IP addresses of the other DVRs in the LAN where the first DVR belongs comprises: sending, by the first DVR, a first request to each of the other DVRs in the LAN, and receiving firmware version number and an IP address provided by each of the other DVRs;
obtaining the file of the newest firmware version from the second DVR that provided the firmware version information of the newest firmware version comprises: sending, by the first DVR, a second request to the second DVR by using the IP address corresponding to the firmware version information of the newest firmware version.

3. The method of claim 1, wherein
comparing all of the obtained firmware version information with the firmware version information of the first DVR to determine the newest firmware version comprises: comparing (S32), by the first DVR, firmware version numbers specified by all of the obtained firmware version information with a firmware version number of the first DVR, selecting (S32) at least one firmware version number larger than the firmware version number of the first DVR, and determining (S32) the largest firmware version number in the selected at least one firmware version number to be the firmware version number of the newest firmware version.

4. The method of claim 1, wherein obtaining by the first DVR firmware version information and IP addresses of the other DVRs in the LAN comprises:
sending, by the first DVR, a connect request to a third DVR of the other DVRs, receiving a connect complete response from the third DVR, sending a first request to the third DVR, and receiving firmware version information of the third DVR.

5. The method of claim 1, further comprising:
discovering (S51), by the first DVR using an active device discover protocol, at least one active DVR in the LAN as the other DVRs.

6. The method of claim 1, further comprising:
receiving, by the first DVR, a startup command to start an update process, and discovering other active DVRs in the LAN as the other DVRs by using an active device discover protocol.

7. The method of any of claims 1 to 6, wherein obtaining by the first DVR the file of the newest firmware version from the second DVR that provided the firmware version information of the newest firmware version comprises:
sending (S51), by the first DVR, a connect request to the second DVR, receiving a connect complete response, sending a second request to the second DVR, and receiving the file sent by the second DVR.

8. The method of claim 1, further comprising:
receiving (S63), by the first DVR, a third request sent by a fourth DVR, and sending (S65) firmware version information and an IP address of the first DVR to the fourth DVR; and
receiving (S63), by the first DVR, a fourth request sent by the fourth DVR, and sending (S66) files of a firmware version of the first DVR to the fourth DVR.

9. A system of updating digital video recorders (10), DVR, **characterized by** that:
a first DVR (10) is configured to obtain firmware version information and IP addresses of the other DVRs (10) within a local area network (20), LAN, where the first DVR belongs, compare all of the obtained firmware version information with firmware version information of the first DVR (10) to determine the newest firmware version, obtain a file of the newest firmware version from a second DVR (10) that provides the firmware version information of the newest firmware version by using an IP address provided by the second DVR (10), and perform version update using the file obtained.

10. The system of claim 9, wherein the first DVR comprises a first request unit and a second request unit, wherein
the first request unit (72) is configured to send the first request to each of the other DVRs in the LAN, and receive firmware version information and an IP address provided by each of the other DVRs; and
the second request unit (73) is configured to send the second request to the second DVR using an IP address corresponding to the firmware version information of the newest firmware version, receive a file of the newest firmware version sent by the second DVR, and perform version update using the file received;
wherein the second DVR is configured to send firmware version information of the second DVR to the first DVR in response to the first request, and send a file of a firmware version of the second DVR to the first DVR in response to the second request.

11. The system of claim 10, wherein the second request unit (73) is further configured to compare firmware version numbers specified by all of the obtained firmware version information with a firmware version number of the first DVR, select at least one firmware version number larger than the firmware version number of the first DVR, and determine the largest firmware version number in the selected at least one firmware version number to be the firmware version number of the newest firmware version.

12. The system of claim 10, wherein the first request unit (72) is configured to send a connect request to a third DVR of the other DVRs, receive a connect complete response from the third DVR, send the first request to the third DVR, and receive firmware version information and an IP address sent by the third DVR.

13. The system of claim 10, wherein the first DVR further comprises a search unit (71), configured to discover other active DVRs in the LAN using an active device discover protocol, and send a command to the first request unit; the first request unit is configured to receive the command, and send the connect request to the active DVRs discovered.

14. The system of claim 10, wherein the second request unit (73) is configured to send a connect request to the second DVR, receive a connect complete response, send the second request to the second DVR, and receive the file sent by the second DVR.

15. The system of claim 9, wherein the first DVR comprises:
a version provide unit (84), configured to receive a third request sent by a fourth DVR, and send firmware version information and an IP address of the DVR to the fourth DVR; and
a file provide unit (85), configured to receive a fourth request sent by the fourth DVR, and send a file of the firmware version of the DVR to the fourth DVR.

## Patentansprüche

1. Verfahren zur Aktualisierung von digitalen Videorekordern, DVR, **gekennzeichnet durch** Umfassen von:
durch einen ersten DVR Beziehen (S31) von Firmwareversionsinformationen und IP-Adressen von den anderen DVR innerhalb eines lokalen Netzwerks, LAN, zu dem der erste DVR gehört;
Vergleichen (S32) aller bezogenen Versionsinformationen mit Firmwareversionsinformationen des ersten DVR, um die neueste Firmwareversion zu bestimmen; und
Beziehen (S33) einer Datei der neuesten Firmwareversion von einem zweiten DVR, der die Firmwareversionsinformationen der neuesten Firmwareversion bereitstellt, durch Verwenden einer IP-Adresse, die von dem zweiten DVR bereitgestellt wird; und
Durchführen (S33) einer Versionsaktualisierung des ersten DVR unter Verwendung der bezogenen Datei.

2. Verfahren nach Anspruch 1, wobei
das Beziehen der Firmwareversionsinformationen und der IP-Adressen von den anderen DVR in dem LAN, zu dem der erste DVR gehört, umfasst: Senden einer ersten Anforderung an jeden der anderen DVR in dem LAN durch den ersten DVR und Empfangen einer Firmwareversionsnummer und einer IP-Adresse, die von jedem der anderen DVR bereitgestellt werden;
das Beziehen der Datei der neuesten Firmwareversion von dem zweiten DVR, der die Firmwareversionsinformationen der neuesten Firmwareversion bereitgestellt hat, umfasst: Senden einer zweiten Anforderung an den zweiten DVR durch den ersten DVR durch Verwenden der IP-Adresse, die den Firmwareversionsinformationen der neuesten Firmwareversion entspricht.

3. Verfahren nach Anspruch 1, wobei
das Vergleichen aller bezogenen Versionsinformationen mit den Firmwareversionsinformationen des ersten DVR, um die neueste Firmwareversion zu bestimmen, umfasst: Vergleichen (S32) von Firmwareversionsnummern, die von allen bezogenen Firmwareversionsinformationen spezifiziert werden, mit einer Firmwareversionsnummer des ersten DVR durch den ersten DVR, Auswählen (S32) von mindestens einer Firmwareversionsnummer, die größer als die Firmwareversionsnummer des ersten DVR ist, und Bestimmen (S32) der größten Firmwareversionsnummer in der ausgewählten mindestens einen Firmwareversionsnummer als die Firmwareversionsnummer der neuesten Firmwareversion.

4. Verfahren nach Anspruch 1, wobei das Beziehen von Firmwareversionsinformationen und IP-Adressen von den anderen DVR in dem LAN durch den ersten DVR umfasst:
Senden einer Verbindungsanforderung an einen dritten DVR der anderen DVR durch den ersten DVR, Empfangen einer Verbindung-abgeschlossen-Antwort von dem dritten DVR, Senden einer ersten Anforderung an den dritten DVR und Empfangen von Firmwareversionsinformationen des dritten DVR.

5. Verfahren nach Anspruch 1, weiterhin umfassend:
Erkennen (S51) von mindestens einem aktiven DVR in dem LAN als die anderen DVR durch den ersten DVR unter Verwendung eines Protokolls zur Erkennung aktiver Vorrichtungen.

6. Verfahren nach Anspruch 1, weiterhin umfassend:
Empfangen eines Startbefehls durch den ersten DVR, um einen Aktualisierungsvorgang zu starten, und Erkennen von anderen aktiven DVR in dem LAN als die anderen DVR durch Verwenden eines Protokolls zur Erkennung aktiver Vorrichtungen.

7. Verfahren nach einem der Ansprüche 1 bis 6, wobei das Beziehen der Datei der neuesten Firmwareversion von dem zweiten DVR, der die Firmwareversionsinformationen der neuesten Firmwareversion bereitgestellt hat, durch den ersten DVR umfasst:
Senden (S51) einer Verbindungsanforderung an den zweiten DVR durch den ersten DVR, Empfangen einer Verbindung-abgeschlossen-Antwort, Senden einer zweiten Anforderung an den zweiten DVR und Empfangen der von dem zweiten DVR gesendeten Datei.

8. Verfahren nach Anspruch 1, weiterhin umfassend:
Empfangen (S63) einer von einem vierten DVR gesendeten dritten Anforderung durch den ersten DVR und Senden (S65) von Firmwareversionsinformationen und einer IP-Adresse des ersten DVR an den vierten DVR und
Empfangen (S63) einer von dem vierten DVR gesendeten vierten Anforderung durch den ersten DVR und Senden (S66) von Dateien einer Firmwareversion des ersten DVR an den vierten DVR.

9. System zur Aktualisierung von digitalen Videorekordern (10), DVR, **dadurch gekennzeichnet, dass**:
ein erster DVR (10) dazu konfiguriert ist, Firmwareversionsinformationen und IP-Adressen von den anderen DVR (10) innerhalb eines lokalen Netzwerks (20), LAN, zu dem der erste DVR gehört, zu beziehen, alle bezogenen Firmwareversionsinformationen mit Firmwareversionsinformationen des ersten DVR (10) zu vergleichen, um die neueste Firmwareversion zu bestimmen, eine Datei der neuesten Firmwareversion von einem zweiten DVR (10), der die Firmwareversionsinformationen der neuesten Firmwareversion bereitstellt, durch Verwenden einer IP-Adresse, die von dem zweiten DVR (10) bereitgestellt wird, zu beziehen und eine Versionsaktualisierung unter Verwendung der bezogenen Datei durchzuführen.

10. System nach Anspruch 9, wobei der erste DVR eine erste Anforderungseinheit und eine zweite Anforderungseinheit umfasst, wobei
die erste Anforderungseinheit (72) dazu konfiguriert ist, die erste Anforderung an jeden der anderen DVR in dem LAN zu senden und Firmwareversionsinformationen und eine IP-Adresse, die von jedem der anderen DVR bereitgestellt werden, zu empfangen;
die zweite Anforderungseinheit (73) dazu konfiguriert ist, die zweite Anforderung an den zweiten DVR unter Verwendung einer IP-Adresse, die den Firmwareversionsinformationen der neuesten Firmwareversion entspricht, zu senden, eine Datei der neuesten Firmwareversion, die von dem zweiten DVR gesendet wird, zu empfangen und eine Versionsaktualisierung unter Verwendung der empfangenen Datei durchzuführen;
wobei der zweite DVR dazu konfiguriert ist, Firmwareversionsinformationen des zweiten DVR an den ersten DVR als Reaktion auf die erste Anforderung zu senden und eine Datei einer Firmwareversion des zweiten DVR an den ersten DVR als Reaktion auf die zweite Anforderung zu senden.

11. System nach Anspruch 10, wobei die zweite Anforderungseinheit (73) weiterhin dazu konfiguriert ist, Firmwareversionsnummern, die von allen bezogenen Firmwareversionsinformationen spezifiziert werden, mit einer Firmwareversionsnummer des ersten DVR zu vergleichen, mindestens eine Firmwareversionsnummer, die größer als die Firmwareversionsnummer des ersten DVR ist, auszuwählen und die größte Firmwareversionsnummer in der ausgewählten mindestens einen Firmwareversionsnummer als die Firmwareversionsnummer der neuesten Firmwareversion zu bestimmen.

12. System nach Anspruch 10, wobei die erste Anforderungseinheit (72) dazu konfiguriert ist, eine Verbindungsanforderung an einen dritten DVR der anderen DVR zu senden, eine Verbindung-abgeschlossen-Antwort von dem dritten DVR zu empfangen, die erste Anforderung an den dritten DVR zu senden und Firmwareversionsinformationen und eine IP-Adresse, die von dem dritten DVR gesendet werden, zu empfangen.

13. System nach Anspruch 10, wobei der erste DVR weiterhin eine Sucheinheit (71) umfasst, die dazu konfiguriert ist, andere aktive DVR in dem LAN unter Verwendung eines Protokolls zur Erkennung aktiver Vorrichtungen zu erkennen und einen Befehl an die erste Anforderungseinheit zu senden; wobei die erste Anforderungseinheit dazu konfiguriert ist, den Befehl zu empfangen und die Verbindungsanforderung an die erkannten aktiven DVR zu senden.

14. System nach Anspruch 10, wobei die zweite Anforderungseinheit (73) dazu konfiguriert ist, eine Verbindungsanforderung an den zweiten DVR zu senden, eine Verbindung-abgeschlossen-Antwort zu empfangen, die zweite Anforderung an den zweiten DVR zu senden und die von dem zweiten DVR gesendete Datei zu empfangen.

15. System nach Anspruch 9, wobei der erste DVR umfasst:
eine Versionsbereitstellungseinheit (84), die dazu konfiguriert ist, eine von einem vierten DVR gesendete dritte Anforderung zu empfangen und Firmwareversionsinformationen und eine IP-Adresse des DVR an den vierten DVR zu senden; und
eine Dateibereitstellungseinheit (85), die dazu konfiguriert ist, eine von dem vierten DVR gesendete vierte Anforderung zu empfangen und Dateien der Firmwareversion des DVR an den vierten DVR zu senden.

## Revendications

1. Procédé de mise à jour d'enregistreurs vidéo numériques, DVR, **caractérisé en ce qu'**il comprend de :
obtenir (S31), par un premier DVR, des informations de version de micrologiciel et des adresses IP des autres DVR au sein d'un réseau local, LAN, auquel appartient le premier DVR ;
comparer (S32) toutes les informations de version obtenues avec les informations de version de micrologiciel du premier DVR pour déterminer la version de micrologiciel la plus récente ; et
obtenir (S33) un fichier de la version de micrologiciel la plus récente à partir d'un deuxième DVR qui fournit les informations de version de micrologiciel de la version de micrologiciel la plus récente en utilisant une adresse IP fournie par le deuxième DVR ; et
effectuer (S33) une mise à jour de version du premier DVR en utilisant le fichier obtenu.

2. Procédé selon la revendication 1, dans lequel
l'obtention des informations de version du micrologiciel et des adresses IP des autres DVR du LAN auquel appartient le premier DVR comprend : l'envoi, par le premier DVR, d'une première demande à chacun des autres DVR du LAN, et la réception du numéro de version du micrologiciel et d'une adresse IP fournie par chacun des autres DVR;
l'obtention du fichier de la version la plus récente du micrologiciel du deuxième DVR qui a fourni les informations de version du micrologiciel de la version la plus récente du micrologiciel comprend : l'envoi, par le premier DVR, d'une deuxième demande au deuxième DVR en utilisant l'adresse IP correspondant aux informations de version du micrologiciel de la version la plus récente du micrologiciel.

3. Procédé selon la revendication 1, dans lequel
la comparaison de toutes les informations de version de micrologiciel obtenues avec les informations de version de micrologiciel du premier DVR pour déterminer la version de micrologiciel la plus récente comprend : la comparaison (S32), par le premier DVR, des numéros de version de micrologiciel spécifiés par toutes les informations de version de micrologiciel obtenues avec un numéro de version de micrologiciel du premier DVR, la sélection (S32) d'au moins un numéro de version de micrologiciel supérieur au numéro de version de micrologiciel du premier DVR, et la détermination (S32) du plus grand numéro de version du micrologiciel dans au moins un numéro de version de micrologiciel sélectionné comme étant le numéro de version du micrologiciel de la version la plus récente du micrologiciel.

4. Procédé selon la revendication 1, dans lequel l'obtention par le premier DVR d'informations de version de micrologiciel et d'adresses IP des autres DVR dans le LAN comprend de:
envoyer, par le premier DVR, une demande de connexion à un troisième DVR des autres DVR, recevoir une réponse de connexion complète du troisième DVR, envoyer une première demande au troisième DVR et recevoir des informations de version de micrologiciel du troisième DVR.

5. Procédé selon la revendication 1, comprenant en outre :
découvrir (S51), par le premier DVR en utilisant un protocole de découverte de dispositif actif, au moins un DVR actif dans le LAN comme les autres DVR.

6. Procédé selon la revendication 1, comprenant en outre de :
recevoir, par le premier DVR, une commande de démarrage pour démarrer un processus de mise à jour, et découvrir d'autres DVR actifs dans le réseau local comme les autres DVR en utilisant un protocole de découverte de dispositif actif.

7. Procédé selon une quelconque des revendications 1 à 6, dans lequel l'obtention par le premier DVR du fichier de la version de micrologiciel la plus récente à partir du deuxième DVR qui a fourni les informations de version de micrologiciel de la version de micrologiciel la plus récente comprend de:
envoyer (S51), par le premier DVR, une demande de connexion au deuxième DVR, recevoir une réponse de connexion complète, envoyer une deuxième demande au deuxième DVR, et recevoir le fichier envoyé par le deuxième DVR.

8. Procédé selon la revendication 1, comprenant en outre de :
recevoir (S63), par le premier DVR, une troisième demande envoyée par un quatrième DVR, et envoyer (S65) des informations de version de micrologiciel et une adresse IP du premier DVR au quatrième DVR ; et
recevoir (S63), par le premier DVR, une quatrième demande envoyée par le quatrième DVR, et envoyer (S66) des fichiers d'une version de micrologiciel du premier DVR au quatrième DVR.

9. Système de mise à jour d'enregistreurs vidéo numériques (10), DVR, **caractérisé en ce que** :
un premier DVR (10) est configuré pour obtenir des informations de version de micrologiciel et des adresses IP des autres DVR (10) au sein d'un réseau local (20), LAN, auquel appartient le premier DVR, comparer toutes les informations de version de micrologiciel obtenues avec le informations de version de micrologiciel du premier DVR (10) pour déterminer la version de micrologiciel la plus récente, obtenir un fichier de la version de micrologiciel la plus récente à partir d'un deuxième DVR (10) qui fournit les informations de version de micrologiciel de la version de micrologiciel la plus récente en utilisant une adresse IP fournie par le deuxième DVR (10) et effectuer la mise à jour de la version à l'aide du fichier obtenu.

10. Système selon la revendication 9, dans lequel le premier DVR comprend une première unité de demande et une deuxième unité de demande, dans lequel
la première unité de demande (72) est configurée pour envoyer la première demande à chacun des autres DVR du réseau local, et recevoir des informations de version de micrologiciel et une adresse IP fournie par chacun des autres DVR ; et
la deuxième unité de demande (73) est configurée pour envoyer la deuxième demande au deuxième DVR en utilisant une adresse IP correspondant aux informations de version de micrologiciel de la version de micrologiciel la plus récente, recevoir un fichier de la version de micrologiciel la plus récente envoyé par le deuxième DVR, et effectuer une mise à jour de la version à l'aide du fichier reçu ;
dans lequel le deuxième DVR est configuré pour envoyer des informations de version de micrologiciel du deuxième DVR au premier DVR en réponse à la première demande, et envoyer un fichier d'une version de micrologiciel du deuxième DVR au premier DVR en réponse à la deuxième demande.

11. Système selon la revendication 10, dans lequel la deuxième unité de demande (73) est en outre configurée pour comparer les numéros de version de micrologiciel spécifiés par toutes les informations de version de micrologiciel obtenues avec un numéro de version de micrologiciel du premier DVR, sélectionner au moins un numéro de version de micrologiciel supérieur au numéro de version du micrologiciel du premier DVR, et déterminer le plus grand numéro de version du micrologiciel dans au moins un numéro de version du micrologiciel sélectionné comme étant le numéro de version du micrologiciel de la version la plus récente du micrologiciel.

12. Système selon la revendication 10, dans lequel la première unité de demande (72) est configurée pour envoyer une demande de connexion à un troisième DVR des autres DVR, recevoir une réponse de connexion complète du troisième DVR, envoyer la première demande au troisième DVR et recevoir des informations relatives à la version du micrologiciel et une adresse IP envoyée par le troisième DVR.

13. Système selon la revendication 10, dans lequel le premier DVR comprend en outre une unité de recherche (71), configurée pour découvrir d'autres DVR actifs dans le réseau local en utilisant un protocole de découverte de dispositif actif, et envoyer une commande à la première unité de demande ; la première unité de demande est configurée pour recevoir la commande et envoyer la demande de connexion aux DVR actifs découverts.

14. Système selon la revendication 10, dans lequel la deuxième unité de demande (73) est configurée pour envoyer une demande de connexion au deuxième DVR, recevoir une réponse de connexion complète, envoyer la deuxième demande au deuxième DVR et recevoir le fichier envoyé par le deuxième DVR.

15. Système selon la revendication 9, dans lequel le premier DVR comprend :
une unité de fourniture de version (84), configurée pour recevoir une troisième demande envoyée par un quatrième DVR, et envoyer les informations de version du micrologiciel et une adresse IP du DVR au quatrième DVR ; et
une unité de fourniture de fichier (85), configurée pour recevoir une quatrième demande envoyée par le quatrième DVR, et envoyer un fichier de la version du micrologiciel du DVR au quatrième DVR.
